Europäisches Patentamt

European Patent Office

Office européen des brevets

(19)

(11) Veröffentlichungsnummer : **0 135 828**
**B1**

(12) # EUROPÄISCHE PATENTSCHRIFT

(45) Veröffentlichungstag der Patentschrift :
02.11.89

(51) Int. Cl.⁴ : **A 43 B 17/00, B 32 B 5/18**

(21) Anmeldenummer : 84110205.6

(22) Anmeldetag : 28.08.84

(54) **Bahnförmiges Material aus Kunststoff und Latexschaum, insbesondere zur Herstellung von Einlegesohlen und Verfahren zu seiner Herstellung.**

(30) Priorität : 17.09.83 DE 3333694

(43) Veröffentlichungstag der Anmeldung :
03.04.85 Patentblatt 85/14

(45) Bekanntmachung des Hinweises auf die Patenterteilung : 02.11.89 Patentblatt 89/44

(84) Benannte Vertragsstaaten :
AT BE CH DE FR GB IT LI LU NL SE

(56) Entgegenhaltungen :
DE–U– 8 130 561
FR–A– 1 550 460
GB–A– 852 025

(73) Patentinhaber : **Nitex GmbH
Fuhrberger Weg 10
D-3002 Wedemark 1 (DE)**

(72) Erfinder : **Anger, Wolfgang, Dipl.-Ing.
Hellwiesen 5
D-3002 Wedemark 9 (DE)**

(74) Vertreter : **Rücker, Wolfgang, Dipl.-Chem.
Hubertusstrasse 2
D-3000 Hannover 1 (DE)**

EP 0 135 828 B1

## Beschreibung

Die Erfindung betrifft ein bahnförmiges Material aus Kunststoff und Latexschaum, insbesondere zur Herstellung von Einlegesohlen sowie ein Verfahren zu seiner Herstellung.

Es ist bekannt, Latexschaum auf ein Textil, Vlies oder Filz zu streichen.

Es ist ferner bekannt, Latexschaum auf eine Trägerbahn zu streichen, die ein Trennmittel enthält, so daß der Latexschaum später abgezogen werden kann.

Es ist bekannt, Latexschaum, der auf eine der oben beschriebenen Trägerbahnen gestrichen ist zu prägen, mit anderen Schichten zu kombinieren und daraus Einlegesohlen zu stanzen.

Es ist ferner bekannt, eine Latexschaumschicht auf eine Trägerbahn zu streichen, deren Oberfläche ein Trennmittel enthält, so daß die Latexschaumschicht nach der Vulkanisation abgezogen werden kann.

Die Erfindung hatte es sich daher zur Aufgabe gestellt, ein solches bahnförmiges Ausgangsmaterial der eingangs beschriebenen Art zu schaffen, aus dem insbesondere Einlegesohlen mit besseren thermischen Eigenschaften herstellbar sind.

Erreicht wird das erfindungsgemäß durch die in den Ansprüchen gekennzeichneten Merkmale und Maßnahmen.

Zur allgemeinen Überraschung hat sich gezeigt, daß bei diesem Prägevorgang, der ein Flächen-, Linien- oder Punktmuster erzeugt, die gelierte Latexschaumschicht sich an den Stellen höchsten Druckes von der Trägerbahn ablöst, so daß entsprechende flächen-, streifen- oder punktförmige Luft enthaltende Hohlräume zwischen Latexschaumschicht und Trägerschicht entstehen.

Die Trägerschicht ist vorzugsweise eine gasundurchlässige Kunststoffolie. Diese Kunststoffolie kann metallisiert sein, beispielsweise mit einer Aluminiummetallschicht bedampft sein. Es kann sich ferner um eine Metallfolie oder um eine Papierbahn entsprechender Qualität handeln.

Dieser überraschende Vorgang läßt sich etwa wie folgt erklären.

Latexschaum hat bekanntlich eine offene Zellenstruktur. Diejenigen Stellen des Schaumes, die durch das Prägen stark verdichtet sind, sind jedoch kein Schaum mehr, sondern eine kompakte Latexmasse, die Wasser und Luft nicht durchläßt. Vor dem Prägen hat sich in dem Gelierkanal der Schaum auf etwa 30 °C erwärmt. Er enthält noch nahezu seine gesamte Feuchtigkeit. Dort, wo der Schaum verdichtet worden ist, ist dieser Wasseranteil des vorherigen Schaumes unter die kompakte Masse gedrückt worden und befindet sich also zwischen der Schicht des verdichteten Latex und der undurchlässigen Folie.

Im anschließenden Vulkanisierkanal, der eine Temperatur von 130 °C bis 150 °C hat, wird nun die Materialbahn weiter erwärmt, wobei das Wasser im Latexschaum zunächst verdunstet, später verdampft. An den verdichteten Stellen gibt der kompakte Schaum jedoch kaum Feuchtigkeit zum Verdunsten frei. Insbesondere die Wassermenge, die zwischen Folie und den verdichteten Stellen des Schaumes ist, wird erst durch Verdampfen frei. Durch die Vergrößerung des Volumens trennt der Dampf die Schicht von der Folie, hebt sie hoch und gibt ihr dadurch eine bleibende Verformung. Es bildet sich ein Hohlraum zwischen Folie und Latexschicht.

Je nach dem gewählten Prägebild können diese Hohlräume Kammern darstellen oder auch gangartig sein, je nachdem man abgeschlossene Luftpolster oder aber eine durchgehende Durchlüftung erreichen will. Das Luftpolster ist ein Bauteil für eine Sohle mit möglichst großer Wärmeisolierung. Der Luftkanal hat seine Funktion in einer Sohle, bei der oberhalb der Folie eine Durchlüftung der Sohle erwünscht ist. Im Sonderfall lassen sich beide Anordnungen, also Luftpolster und Luftkanal, auch kombinieren.

Selbstverständlich ist der Anteil an Fläche, die für die Prägung zur Verfügung steht, begrenzt. Der Flächenanteil des nicht geprägten Schaumes muß groß genug bleiben, um genügend Haftung zwischen Folie und Latexschaum sicherzustellen, so daß noch befriedigende Werte der Zugfestigkeit zwischen Folie und Latexschaum verbleiben.

Die Erfindung wird nun anhand einer Zeichnung, in der Beispiele des bahnförmigen Materials und der Gang seiner Herstellung dargestellt sind, näher erläutert.

Fig. 1 zeigt einen Schnitt durch ein Stück des bahnförmigen Materials gemäß der vorliegenden Erfindung,

Fig. 2a und 2b zeigen Draufsichten auf Einlegesohlen aus einem Material gemäß Fig. 1 mit verschiedenen Prägemustern und

Fig. 3 zeigt schematisch den Verfahrensablauf zur Herstellung des bahnförmigen Materials.

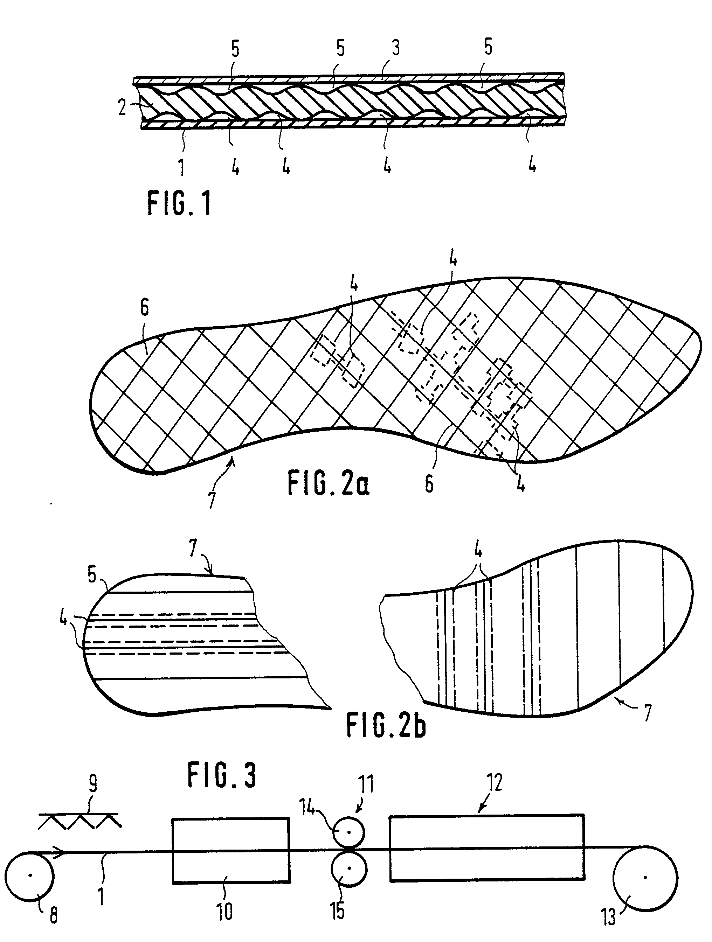

Aus Fig. 1 ist die Trägerbahn 1 zu erkennen, die daraufliegende Latexschaumschicht 2 und eine weitere obere Textilschicht 3. Bei 4 sind Hohlräume zu erkennen, die als Isoliermittel dienen und zu der Trägebahn 1 und der Latexschaumstoffschicht in flächen-, linien- oder punktförmiger Anordnung verlaufen. Die Latexschaumstoffschicht 2 ist ebenfalls auf ihrer Oberseite geprägt, so daß Vertiefungen bei 5 entstehen, denen jeweils entsprechende Hohlräume spiegelbildlicher Gestalt auf der Unterseite der Latexschaumstoffschicht gegenüberliegen. Diese Hohlräume 4 bzw. Vertiefungen 5 können flächen-, linien- oder punktförmig sein, in der Zeichnung sind es Linien 6, in der beschriebenen Einlegesohle 7. Sie können aber auch punktförmig oder flächig angeordnet sein oder rechtwinklig sich kreuzende Linien darstellen. Zur Herstellung der zwischen der Trägerbahn 1 und der Schaumstoffschicht 2 liegenden Hohlräume 4 wird, wie in Fig. 3 schematisch dargestellt und nachfolgend beschrieben, verfahren.

Die Trägerbahn 1 wird von der Rolle 8 abgewickelt und durchläuft in geeigneten Vorrichtungen und in geeigneten Einrichtungen gehalten und gelagert, das Streichwerk, den Gelierkanal 10, das Prägewerk 11 und den Vulkanisierkanal 12 und wird schließlich als fertige geprägte, geschäumte Materialbahn bei 13 aufgewickelt.

Die Latexschaumdispersion wird bei 9 auf die Trägerbahn 1 aufgestrichen, und zwar bei Raumtemperatur. In dem Gelierkanal erwärmt sich die Materialbahn auf Temperaturen um 120 °C.

Beim Durchlaufen des Prägewerks 11, das aus einer oberen profilierten Walze 14 und einer glatten Gegenwalze 15 besteht, wird das linienförmige Muster, wie in Fig. 2 dargestellt, in die Oberfläche der Latexschaumschicht eingeprägt. Sodann gelangt die Materialbahn in den Vulkanisierkanal 12, in welchem bei Temperaturen zwischen 130 °C und 140 °C das restliche Wasser zunächst verdunstet, dann dampfförmig ausgetrieben wird.

Offensichtlich hier in diesem Vulkanisierkanal bilden sich die in Fig. 1 mit 4 bezeichneten Hohlräume dadurch, daß sich der Latexschaum an Stellen höchsten Prägedruckes von der Trägerbahn ablöst. Dieser Vorgang war völlig überraschend und gestattetes, ein bahnförmiges Material zu erzeugen, welches verbesserte thermische Eigenschaften besitzt und welches damit besonders geeignet ist zur Herstellung von Einlegesohlen oder für andere Einbauten in Schuhen.

**Patentansprüche**

1. Bahnförmiges Material aus Kunststoff, insbesondere zur Herstellung von Einlegesohlen, dadurch gekennzeichnet, daß das bahnförmige Material aus einer gasundurchlässigen Trägerbahn (1) und einer darauf liegenden Latexschaumschicht (2) besteht, zwischen denen Hohlräume (4) enthalten sind.

2. Material nach Anspruch 1, dadurch gekennzeichnet, daß die Hohlräume (4) die Form von Kammern oder die Form von Kanälen haben.

3. Material nach Anspruch 1 und 2, dadurch gekennzeichnet, daß die gasundurchlässige Trägerbahn (1) eine Kunststoffolie, eine metallisierte Kunststoffolie, eine Metallfolie oder eine Papierfolie ist.

4. Material nach Anspruch 1 bis 3, dadurch gekennzeichnet, daß in die freiliegende Oberseite der Latexschaumschicht Vertiefungen (5) eingeprägt sind, deren Muster aus Flächen, Linien oder Punkten oder aus Kombinationen daraus bestehen.

5. Material nach Anspruch 1 bis 4, dadurch gekennzeichnet, daß auf der freiliegenden Oberfläche der Latexschaumschicht (2) des bahnförmigen Materials eine weitere Materialschicht (3) aufgebracht ist, derart, daß sich zwischen der Oberseite der Latexschaumschicht (2) und der weiteren Materialbahn (3) lufthaltige Vertiefungen (5) ergeben.

6. Verfahren zur Herstellung einer Materialbahn nach Anspruch 1 bis 5, dadurch gekennzeichnet, daß auf eine gasundurchlässige Trägerbahn ein Latexschaum aufgestrichen und durch Wärmeeinwirkung geliert wird, die Trägerbahn mit dem Latexschaum zwischen einem Walzenpaar, dessen obere, der Latexschaumschicht zugewandte Walze eine profilierte Oberfläche besitzt, kalt geprägt wird und anschließend die geprägte Materialbahn unter Wärmeeinwirkung vulkanisiert wird.

7. Verfahren nach Anspruch 6, dadurch gekennzeichnet, daß die Materialbahn als gasundurchlässige Trägerbahn eine Kunststoffolie, eine metallisierte Kunststoffolie, eine Metallfolie oder eine Papierfolie enthält.

8. Verfahren nach Anspruch 6 und 7, dadurch gekennzeichnet, daß in die Latexschaumschicht der Materialbahn ein Muster eingeprägt wird mit Flächen, Linien oder Punkten.

9. Einlegesohle, dadurch gekennzeichnet, daß sie aus einer Materialbahn nach Anspruch 1 bis 5 ausgestanzt ist.

**Claims**

1. Web-like plastics material, particularly for the production of insoles, characterized in that the web-like material comprises a gastight carrier web (1) and a latex foam layer (2) placed thereon and between which are located cavities (4).

2. Material according to claim 1, characterized in that the cavities (4) are in the form of chambers or channels.

3. Material according to claims 1 and 2, characterized in that the gastight carrier web (1) is a plastics film, a metallized plastics film, a metal foil or a paper sheet.

4. Material according to claims 1 to 3, characterized in that depressions (5) are made in the exposed top of the latex foam layer and their patterns comprise faces, lines or points or combinations thereof.

5. Material according to claims 1 to 4, characterized in that to the exposed surface of the latex foam layer (2) of the web-like material is applied a further material layer (3), in such a way that air-containing depressions (5) are obtained between the top of the latex foam layer (2) and the further material web (3).

6. Process for producing a material web according to claims 1 to 5, characterized in that onto a gastight carrier web is applied a latex foam, which is gelled by heat action, the carrier web with the latex foam is cold embossed between a pair of rollers, whose upper roller facing the latex foam layer has a profiled surface and subsequently the embossed material web is vulcanized under heat action.

7. Process according to claim 6, characterized in that the material web as a gastight carrier web contains a plastics film, a metallized plastics film, a metal foil or a paper sheet.

8. Process according to claims 6 and 7, characterized in that a pattern is impressed in the latex foam layer of the material web with faces, lines or points.

9. Insole, characterized in that it is punched from a material web according to claims 1 to 5.

**Revendications**

1. Matériau en feuille en matière plastique, en particulier pour la fabrication de semelles intérieures, caractérisé en ce que le matériau en feuille est constitué d'une feuille support (1) imperméable aux gaz et d'une couche de mousse de latex (2), située par-dessus, entre lesquelles se trouvent des creux (4).

2. Matériau selon la revendication 1, caractérisé en ce que les creux (4) ont la forme de compartiments ou la forme de canaux.

3. Matériau selon les revendications 1 et 2, caractérisé en ce que la feuille support (1) imperméable aux gaz est une feuille plastique, une feuille plastique métallisée, une feuille métallique ou une feuille de papier.

4. Matériau selon les revendications 1 à 3, caractérisé en ce que dans la face supérieure libre de la couche de latex sont gaufrés des évidements (5), dont le dessin est constitué de surfaces, de lignes ou de points, ou encore de leurs combinaisons.

5. Matériau selon les revendications 1 à 4, caractérisé en ce que, sur la surface supérieure de la couche de latex (2) du matériau en feuille, est appliquée une couche supplémentaire de matériau (3), de telle sorte qu'il se crée entre la face supérieure de la couche de mousse de latex (2) et le reste de la feuille (3) des évidements contenant de l'air.

6. Procédé pour la fabrication d'un matériau en feuille selon les revendications 1 à 5, caractérisé en ce qu'on applique sur une bande support imperméable aux gaz une mousse de latex, et qu'on la gélifie sous l'effet de la chaleur, on gaufre à froid la bande support, avec la mousse de latex, entre une paire de rouleaux dont le rouleau supérieur, dirigée vers la couche de mousse de latex, présente une surface profilée, puis on vulcanise le matériau en feuille, gaufré, sous l'effet de la chaleur.

7. Procédé selon la revendication 6, caractérisé en ce que le matériau en bande contient, en tant que bande support imperméable aux gaz, une feuille plastique, une feuille plastique métallisée, une feuille métallique ou une feuille de papier.

8. Procédé selon les revendications 6 et 7, caractérisé en ce que, dans la couche de mousse de latex du matériau en feuille, un dessin est gaufré, présentant des surfaces, des lignes ou des points.

9. Semelle intérieure, caractérisée en ce qu'elle est découpée à partir d'un matériau en feuille selon les revendications 1 à 5.

FIG. 1

FIG. 2a

FIG. 2b

FIG. 3